## Europäisches Patentamt

## European Patent Office

## Office européen des brevets

(19)

(11) Publication number: **0 008 471**
**B1**

(12) **EUROPEAN PATENT SPECIFICATION**

(45) Date of publication of patent specification: **28.07.82**

(51) Int. Cl.³: **C 02 F 3/30**

(21) Application number: **79200431.9**

(22) Date of filing: **03.08.79**

(54) Process for the nitrification and denitrification of waste water.

(30) Priority: **18.08.78 NL 7808555**

(43) Date of publication of application:
**05.03.80 Bulletin 80/5**

(45) Publication of the grant of the patent:
**28.07.82 Bulletin 82/30**

(84) Designated Contracting States:
**AT BE CH DE FR GB IT NL SE**

(56) References cited:
**GB - A - 1 372 367**
**GB - A - 1 511 047**

**JOURNAL OF WATER POLLUTION CONTROL FEDERATION, vol. 48, no. 3, March 1976 Washington D.C., U.S.A. D.F. BISHOP et al.: "Single-stage nitrification-denitrification" pages 520—532.**

(73) Proprietor: **STAMICARBON B.V.**
**Postbus 10**
**NL-6160 MC. Geleen (NL)**

(72) Inventor: **Baenens, Victor Elodie Albert**
**Josef Smeetslaan 232**
**3630 Maasmechelen (BE)**
Inventor: **Van Gool, Hans**
**Kennedylaan 11**
**NL-6141 CA Limbricht (NL)**

(74) Representative: **Hatzmann, Marinus Jan et al,**
**OCTROOIBUREAU DSM P.O. Box 9**
**NL-6160 MA Geleen (NL)**

## Process for the nitrification and denitrification of waste water

The invention relates to a process for the nitrification and denitrification of waste water by means of activated sludge in a reservoir, in which the waste water in one reaction space continuously passes successively through an aerobic and an anaerobic zone.

Such a process is known e.g. from: Van de Geest in Witvoet, Nitrification and denitrification in carrousel systems, Conference on nitrogen as a water pollutant, Vol. 3, IAWPR, and is carried out in an oxidation ditch of the carrousel type with suspended activated sludge, as described in Dutch Patent 131,423.

The purification of waste water containing nitrogen compounds in reduced and in oxidized form conventionally presents a problem in that at least two steps are required to remove these compounds from the waste water.

Under aerobic conditions, that is in the presence of molecular oxygen dissolved in water, the reduced nitrogen compounds are oxidized by microorganisms to form nitrate, which in this context is also understood to mean nitrite. Subsequently the nitrates already present in the waste water and those formed under aerobic conditions are reduced to molecular nitrogen under anaerobic conditions.

It is known that the bacteria which are active in nitrification and denitrification can stand sudden changes in oxygen concentration, without the removal of nitrogen compounds from waste water being adversely affected, so that it is possible to both nitrify and denitrify in one single reaction space with one and the same sludge mass.

Since in a process for the denitrification and nitrification of waste water in an oxydation ditch as described above the distances between the places where the water is aerated are rather large, anaerobic zones, i.e. zones in which the oxygen content is so low that nitrification can no longer occur, are formed owing particularly to the oxygen consumption during the oxidation of organic material and ammonia by the activated sludge, so that in one reaction space both nitrification and denitrification occur.

In such a process the cycle time of the waste water is approximately 15 to 30 minutes. Cycle time as used herein is understood to mean the elapsed time from the moment the waste water enters an aerobic zone until the waste water enters the next aerobic zone, i.e. the residence time of the waste water in a path formed by an aerobic and the next downstream anaerobic zone together.

British Patent Specification 1,438,697 describes a process for the removal of nitrogen compounds from waste water in which the waste water is denitrified in a first step, nitrified in a second step, and again denitrified in a third step. The effluent from the second step is recycled to the first step. This process can be used if the amount of organic material present in the waste water is proportionally small compared with the amount of nitrogen compounds.

According to Dutch Patent Application 7,405,627, the elimination of nitrogen compounds in waste water can also be achieved in that, within a period of 24 hours, and in one reservoir, the waste water produced is subjected at least during the production hours, to an aerobic treatment in the presence of suspended activated sludge, next the waste water is brought into an anaerobic condition whilst the activated sludge is kept suspended, after which, finally, the suspended sludge is allowed to settle and the clear liquid is decanted. This process can only be carried out discontinuously.

As the carrying-out of nitrification and denitrification in an oxidation ditch of the carrousel type has the disadvantage that the plant must have a complicated form to effect the required residence times and to maintain a piston flow in the oxidation ditch, this type is less suited for a small-scale operation.

An additional disadvantage is that virtually all organic material is removed in the aerobic zone by oxidation with oxygen. This has as a consequence that the denitrification in the anaerobic zone must take place by endogenous respiration of the microorganisms and not by oxidation of organic material present in the waste water. With endogenous respiration, the denitrification rate is low, so that only partial denitrification takes place unless a comparatively long residence time in the anaerobic zone is applied.

A process is also described in British Patent Specification 1,511,047, wherein a nitrification-denitrification one step treatment of waste water is disclosed. In this process the minimal cycle time is about 15 minutes.

The process according to British Patent Specification 1,438,697 does not have the disadvantage that virtually all organic material is removed in the aerobic zone. It does, however, require that the treatment be carried out in at least three separated steps, so that at least three reaction spaces are required.

The process according to Dutch Patent Application 7,405,627 has the disadvantages of less flexibility and unsuitablility for continuously operating plants.

The aim of the invention is to provide a continuous process in which waste water is nitrified and denitrified in one reaction space without the above disadvantages occurring, so that comparatively small and simple units will suffice.

According to the invention this is accomplished if the cycle time is at most 3 minutes, provided, that the concentration of molecular oxygen dissolved in the waste water is in at least 40% of the reservoir contents at least 0.5 mg/l (aerobic zone), and in at least 20% of the reservoir contents at most 0.1 mg/l (anaerobic zone), at a sludge load of at most 0,2 g of $BOD_5^{20}$/(g of sludge, day), these percentages, like all percentages mentioned hereinafter, are given by volume.

Oxygen concentration is here understood to mean, as is usual in the art, the concentration in the water phase and not in the sludge phase.

Sludge load is understood to mean the number of grammes of pollutants, expressed as $BOD_5^{20}$ (determined in accordance with NEN 3235—5.4), that is supplied to the purification plant per gramme of sludge and per day.

It is particularly surprising that nitrification and denitrification occur to such an extent in one reaction space at the very short residence times in the respective zones. The short cycle times, combined with the slight quantity of dissolved molecular oxygen in the aerobic zone, made it hardly likely that nitrification would take place.

The process according to the invention differs from the prior art in that high denitrification efficiencies are reached, so that comparatively small and simple units suffice. Possibly this is accomplished because part of the organic pollutants entering the aerobic zone is not oxidized with oxygen but adsorbed onto the sludge and is not degraded until it reaches the anaerobic zone.

The cycle time should not be longer than 3 minutes. At longer cycle times there is such a large decrease of the denitrification rate that cycle times as in the known processes become necessary to effect the same results as at the very short cycle times. The maximum cycle time preferably is 1 minute. The minimum cycle time is dependent upon the practical realization of the process according to the invention and will generally be at least $\frac{1}{2}$ minute.

It is not necessary for the cycle time to be the same in all cases. It is well possible that, before returning to the starting point, the water in a plant passes through several cycles, all of which may have different cycle times.

The concentration of molecular oxygen dissolved in the waste water preferably is at least 0.5 mg/l in at least 50% and at most 0.1 mg/l in at least 20% of the reservoir contents.

The concentration of dissolved molecular oxygen in the aerobic zone by preference is at most 3 mg/l, more in particular at most 1.5 mg/l.

At sludge loads exceeding 0.2 gramme of $BOD_5^{20}$/(gramme of sludge, day) the processes of nitrification and denitrification generally come to a standstill under the conditions mentioned. The sludge load preferably varies between 0.02 and 0.1 g of $BOD_5^{20}$/(gramme of sludge, day).

The process according to the invention discredits the prejudice that nitrification and denitrification must be carried out, if not in separate reservoirs, at least in very clearly distinct parts of one reservoir. One of the consequences of the present invention is, therefore, that the construction of the reservoir is simple, and thus cheaper.

In the process according to the invention, too, there could be said to be two distinct areas in one reservoir. The residence times in both zones, however, are only a fraction of the known residence times, while furthermore the oxygen concentration in the aerobic zone is substantially lower than it is according to the known process, so that compared with the known process the separation into two zones is far less marked. In fact, in the process according to the invention the aerobic zone has the same operating conditions that in the known process prevail in the areas where the aerobic zone changes into the anaerobic one. It may, therefore, be characterized as very surprising that under these conditions complete nitrification still occurs.

It is of importance that by the invention the deficiencies attached to oxidation ditches of the carrousel type and purification plants for discontinuous processes are avoided in a simple manner. The measures according to the invention allow the waste water produced to be treated both on a small and on a large scale with one type of plant.

The process according to the invention is preferably carried out with suspended activated sludge. Molecular oxygen can be introduced by means of water jets, for instance as described in Dutch Patent Application 7,301,201. With this process a very good mixing of waste water, activated sludge and molecular oxygen is obtained. In this case it may be advantageous to combine the aeration by the abovementioned water jets with automated, infinitely or stepwise variable oxygen introduction. This can in this case, for instance, be accomplished by lowering the outflow velocity of the water jets by reducing the pump capacity.

The invention can also be carried out in a packed or unpacked column, 'unpacked column' also being understood to mean a shaft that is entirely or partly buried in the ground. In a packed column, the process according to the invention can, for instance, be carried out by leading waste water containing dissolved oxygen into the bottom of a column.

On account of the simplicity of the installation in which the process according to the invention can be applied, tanks built as caissons that are sunk in the appropriate place are also very suitable.

The process according to the invention can also be carried out in certain existing types of equipment. In principle, then only the control of the aeration, and in some cases the aeration system, need be adapted in an adequate way to the process according to the invention.

In so far as suspended activated sludge is applied in the process according to the invention, sludge settling will generally take place outside the reservoir in which nitrification and denitrification take place. Recycling and discharge of settled sludge are effected in a known manner.

A complete explanation for the simultaneous occurrence of nitrification and denitrification in one reservoir, under process conditions that are very unfavourable for nitrification, has not yet been found. The work of applicant, however, has resulted in a biological, continuous waste water purification process by which an important contribution is made to the public interest, and more particularly to the reduction of the discharge of pollutants into the surface water.

### EXAMPLE I

To a circular reservoir with a volume of 1500 m³, provided with a water-jet aeration system as described in Dutch Patent Application 7,301,201, waste water was supplied at the rate of 40 m³/hour.

The water in the reservoir, which contained suspended activated sludge, was recycled via the water jets, so that a rotating horizontal flow was created in the reservoir. The cycle time in the reservoir was at most 100 seconds.

In a first experiment waste water of the following composition was supplied to the reservoir:

| COD | mg/l | 580 |
|---|---|---|
| Kjeldahl-N | mg/l | 80 |
| $NH_4$—N | mg/l | 58 |
| $NO_2$—N | mg/l | <0.5 |
| $NO_3$—N | mg/l | <1 |

This resulted in a sludge load of 0.08 g of $BOD_5^{20}$/(gramme of sludge, day). The aeration was controlled so that in approx. 60% of the reservoir the oxygen content amounted to more than 0.5 mg/l. In 20—25% of the reservoir this content was below 0.1 mg/l.

The effluent from the reservoir after separation of the sludge had the following composition:

| COD | mg/l | 65 |
|---|---|---|
| Kjeldahl—N | mg/l | 5 |
| $NH_4$—N | mg/l | 5 |
| $NO_2$—N | mg/l | <0.5 |
| $NO_3$—N | mg/l | 3 |

This means that a drastic reduction of organic material and nitrogen has been obtained.

### EXAMPLE II

A second experiment was carried out under virtually the same conditions as the first experiment. Now the sludge load was 0.10 g of $BOD_5^{20}$/(gramme of sludge, day), in 30—35% of the reservoir the oxygen concentration exceeded 0.5 mg/l, and in 30—35% of the reservoir the oxygen concentration was below 0.1 mg/l.

In the following table the compositions of supply and discharge are given side by side.

| | | supply | discharge |
|---|---|---|---|
| COD | mg/l | 690 | 55 |
| Kjeldahl-N | mg/l | 90 | 16 |
| $NH_4$—N | mg/l | 85 | 16 |
| $NO_2$—N | mg/l | <0.5 | 1 |
| $NO_3$—N | mg/l | <0.1 | <1 |

As clearly appears from the results of this experiment, the nitrification, compared with the first experiment, is substantially less, resulting in an increased discharge of in particular $NH_4$—N, as a consequence of the fact that the aerobic zone was too small.

### Claims

1. Process for the nitrification and denitrification of waste water by means of activated sludge in a reservoir in which the waste water in one reaction space continuously passes successively through an aerobic and an anaerobic zone, this process being characterized in that the cycle time is at most 3 minutes, the concentration of dissolved molecular oxygen is at least 40% of the contents of the reservoir at least 0.5 mg/l and in at least 20% of the contents of the reservoir at most 0.1 mg/l, at a sludge load of at most 0.2 g of $BOD_5^{20}$/(gramme of sludge, day).

2. Process according to claim 1, characterized in that the cycle time is between ½ and 1 minute.

3. Process according to claim 1 or 2, characterized in that the sludge load is between 0.02 and 0.1 g of $BOD_5^{20}$/(gramme of sludge, day).

4. Process according to claims 1—3, characterized in that in at least 50% of the reservoir contents the concentration of dissolved molecular oxygen is at least 0.5 mg/l.

5. Process according to any one of the claims 1—4, characterized in that the dissolved molecular oxygen concentration is at most 3 mg/l.

6. Process according to any one of the claims 1—5, characterized in that the activated sludge is suspended in the waste water.

**Revendications**

1. Procédé de nitrification et de dénitrification des eaux résiduaires à l'aide de boue activée dans un réservoir, dans lequel les eaux résiduaires passent en continu et successivement par des zones aérobie et anaérobie dans un seul espace de réaction, caractérisé en ce que le temps de cycle est de 3 minutes au maximum, que, dans du moins 40% du contenu du réservoir, la concentration d'oxygène moléculaire dissous est de 0.5 mg/l au minimum et que, dans du moins 20% du contenu de réservoir, cette concentration est de 0.1 mg/l au maximum, alors que la charge de boue est de 0.2 g de $DBO_5^{20}$ (g de boue/jour) au maximum.

2. Procédé selon la revendication 1, caractérisé en ce que le temps de cycle se situe entre $\frac{1}{2}$ et 1 minute.

3. Procédé selon l'une des revendications 1 à 2, caractérisé en ce que la charge de boue se situe entre 0.02 et 0.1 g de $DBO_5^{20}$ (g de boue/jour).

4. Procédé selon l'une des revendications 1 à 3, caractérisé en ce que, dans du moins 50% du contenu du réservoir, la concentration d'oxygene moléculaire dissous est de 0.5 mg/l au minimum.

5. Procédé selon l'une des revendication 1 à 4, caractérisé en ce que la concentration d'oxygène moléculaire dissous est de 3 mg/l au maximum.

6. Procédé selon l'une des revendications 1 à 5, caractérisé en ce que la boue activée est mise en suspension dans les eaux résiduaires.

**Patentansprüche**

1. Verfahren zur Nitrifizierung und Denitrifizierung von Abwasser mittels Aktivschlamm in einem Behälter, worin das Abwasser in einem Reaktionsraum kontinuierlich eine aerobe und eine anaerobe Zone durchläuft, dadurch gekennzeichnet, daß die Kreislaufzeit höchstens 3 min, die Konzentration von gelöstem molekularem Sauerstoff in mindestens 40% des Behälterinhaltes mindestens 0,5 mg/l und in mindestens 20% des Behälterinhaltes höchstens 0,1 mg/l bei einer Schlammbeladung von höchstens 0,2 g $BOD_5^{20}$/(g Schlamm, Tag) beträgt.

2. Verfahren nach Anspruch 1, dadurch gekennzeichnet, daß die Kreislaufzeit zwischen 1/2 und 1 min liegt.

3. Verfahren nach Anspruch 1 oder 2, dadurch gekennzeichnet, daß die Schlammbeladung zwischen 0,02 und 0,1 g $BOD_5^{20}$/(g Schlamm, Tag) liegt.

4. Verfahren nach den Ansprüche 1 bis 3, dadurch gekennzeichnet, daß in mindestens 50% des Behälterinhaltes die Konzentration des gelösten molekularen Sauerstoffs mindestens 0,5 mg/l beträgt.

5. Verfahren nach einem der Ansprüche 1 bis 4, dadurch gekennzeichnet, daß die Konzentration des gelösten molekularen Sauerstoffs höchstens 3 mg/l beträgt.

6. Verfahren nach einem der Ansprüche 1 bis 5, dadurch gekennzeichnet, daß der Aktivschlamm im Abwasser suspendiert ist.